**Europäisches Patentamt**

**European Patent Office**

**Office européen des brevets**

(11) Veröffentlichungsnummer : **0 448 964 B1**

(12) **EUROPÄISCHE PATENTSCHRIFT**

(45) Veröffentlichungstag der Patentschrift :
**02.12.92 Patentblatt 92/49**

(21) Anmeldenummer : **91102740.7**

(22) Anmeldetag : **25.02.91**

(51) Int. Cl.⁵ : **F16L 3/10**

(54) **Rohrschelle.**

(30) Priorität : **07.03.90 DE 9002663 U**

(43) Veröffentlichungstag der Anmeldung :
**02.10.91 Patentblatt 91/40**

(45) Bekanntmachung des Hinweises auf die
Patenterteilung :
**02.12.92 Patentblatt 92/49**

(84) Benannte Vertragsstaaten :
**CH DE ES FR GB IT LI NL**

(56) Entgegenhaltungen :
**CH-A- 562 980**
**DE-A- 1 960 542**
**DE-C- 509 529**
**DE-U- 8 806 714**

(73) Patentinhaber : **Müller, Franz**
**Eichelhäherstrasse 1**
**W-6200 Wiesbaden (DE)**

(72) Erfinder : **Schulte, Helmut**
**Oberer Worthhagen 17**
**W-5880 Lüdenscheid (DE)**

(74) Vertreter : **Jochem, Bernd, Dipl.-Wirtsch.-Ing.**
**Patentanwälte Beyer & Jochem Postfach 17 01**
**45 Staufenstrasse 36**
**W-6000 Frankfurt/Main 1 (DE)**

EP 0 448 964 B1

Jouve, 18, rue Saint-Denis, 75001 PARIS

## Beschreibung

Die Erfindung betrifft eine ein- oder mehrteilige Rohrschelle mit wenigstens einer durch radial abgebogene Aufnahmeschenkel begrenzten Öffnung und einer Spannschraube zum Verbinden der Aufnahmeschenkel. Eine solche Rohrschelle ist zum Beispiel aus der CH-A-562 980 bekannt

Eine Rohrschelle für einen bestimmten Rohrdurchmesser ist so bemessen, daß das betreffende Rohr bei aneinander anliegenden Aufnahmeschenkeln festgeklemmt ist. Wenn jedoch Kunststoffrohre oder andere spezielle Rohre eingesetzt werden, so muß die Rohrschelle als Losschelle ausgebildet sein. Dieses macht es erforderlich, entweder eine Rohrschelle mit größerer Abmessung zu verwenden oder die Spannschrauben abzulösen, einen Abstandring auf den Schraubenschaft zu schieben und die Rohrschelle wieder zusammenzusetzen. Beides ist unerwünscht und unzweckmäßig.

Aufgabe der Erfindung ist eine solche Ausbildung einer Rohrschelle, daß sie ohne vollständiges Abnehmen der Spannschrauben in eine Losschelle oder eine Festschelle umgewandelt bzw. auf unterschiedliche Rohrdurchmesser eingestellt werden kann.

Diese Aufgabe wird erfindungsgemäß dadurch gelöst, daß auf dem Schaft der Spannschraube zwischen den Aufnahmeschenkeln ein radial aufklipsbarer und abnehmbarer geschlitzter Abstandring sitzt.

Die neue Rohrschelle unterscheidet sich insofern vom Stand der Technik, als der geschlitzte Abstandring nach Lösen der jeweiligen Spannschraube auf den Schraubenschaft aufklipsbar ist. Die Spannschraube kann dabei in dem Muttergewinde gehalten werden. Es ist kein vollständiges Herausschrauben der Spannschraube erforderlich. Infolgedessen können bei einer Gelenkschraubrohrschelle deren Teile, insbesondere der Schellenbügel, nicht herabfallen. Außerdem sorgt ein mit Vorspannung auf dem Schraubenschaft sitzender Abstandring dafür, daß die Spannschraube unverlierbar gehalten ist. Hierdurch wird die Handhabung der Gelenkschraubrohrschelle außerordentlich erleichtert.

In weiterer Ausbildung ist vorgesehen, daß der Abstandring einen über etwa 90° des Umfangsbogens reichenden Schlitz aufweist. Hierdurch wird erreicht, daß der Abstandring ohne Schwierigkeiten auf den Schraubenschaft aufgeklipst werden kann.

Eine Ausführungsform der Erfindung wird im folgenden unter Bezugnahme auf die anliegende Zeichnung erläutert, in der darstellen:

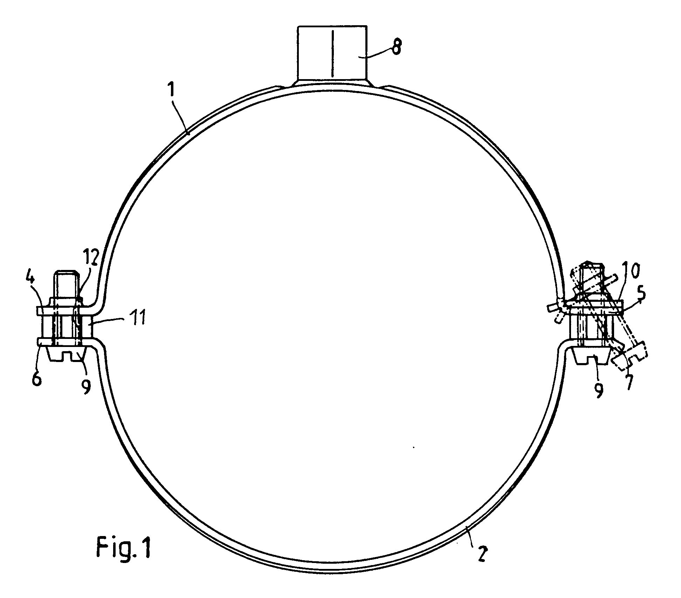

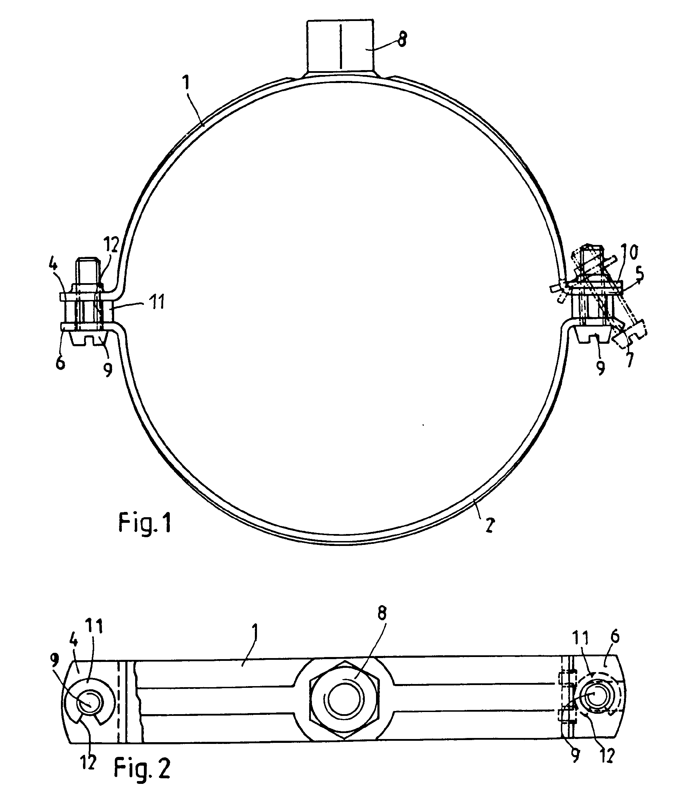

Fig. 1 eine Gelenkschraubrohrschelle in Seitenansicht und

Fig. 2 eine Draufsicht zu Fig. 1, teilweise aufgebrochen.

Die Gelenkschraubrohrschelle umfaßt einen ersten halbringförmigen Schellenbügel 1 und einen zweiten, ebenfalls halbringförmig ausgebildeten Schellenbügel 2. Die beiden Schellenbügel weisen jeweils radial abgebogene Aufnahmeschenkel 4, 5 bzw. 6, 7 auf, die einander jeweils paarweise gegenüberstehen. Anstelle eines Paares von Aufnahmeschenkeln kann man auch eine Gelenkverbindung vorsehen. An dem Schellenbügel 1 sitzt ein Hülsenteil 8, das mit einer Tragkonstruktion zusammenwirkt. Das Hülsenteil 8 kann ein Gewindeteil sein.

Die Schellenbügel 1 und 2 sind an beiden Seiten durch Spannschrauben 9 zusammengehalten. Eine Spannschraube 9 kann in eine Kippmutter 10 eingreifen, so daß die Spannschraube 9 in die strichpunktierte Stellung aus einem seitlich offenen Schlitz im Aufnahmeschenkel 2 herausgeschwenkt werden kann und ein Öffnen der Schellenbügel ermöglicht. Der Durchmesser der Schellenbügel ist so bemessen, daß sich die Schellenbügel beim Anziehen der Spannschraube 9 auf dem betreffenden Rohr festklemmen.

Wenn die Gelenkrohrschelle eine Losschelle sein soll - dies gilt insbesondere für Kunststoffrohre im Frischwasserbereich und im Abwasserbereich -, so wird die Gelenkrohrschelle erfindungsgemäß dadurch in einfacher Weise umgerüstet, daß die Spannschrauben 9 teilweise gelöst werden. Man kann dann jeweils einen Abstandring 11 zwischen den einander gegenüberstehenden Aufnahmeschenkeln 4, 6 oder 5, 7 auf den Gewindeschaft aufklipsen. Jeder Abstandring 11 weist einen Schlitz 12 auf, der etwa über 90° des Umfangsbogens reicht. Dadurch ist sichergestellt, daß der Abstandring leicht auf den Gewindeschaft aufgeklipst werden kann, ohne daß Verformungen auftreten. Der Abstandring 11 besteht aus einem festen Kunststoff. Er kann profiliert sein. Man kann Abstandringe 11 in unterschiedlicher axialer Länge bereithalten. Dadurch wird die Gelenkschraubrohrschelle an unterschiedliche Rohrdurchmesser anpaßbar.

Es versteht sich, daß, abweichend von der als Ausführungsbeispiel dargestellten Gelenkrohrschelle, auch andere Rohrschellen in ihrem Durchmesser durch auf die Spannschrauben aufklipsbare Abstandringe verändert werden können. Es spielt dabei keine Rolle, ob die Rohrschelle aus einem einzigen, ringförmigen Bügel besteht, der verhältnismäßig leicht verformbar ist, oder ob die Rohrschelle über ein oder mehrere Gelenke, gelenkartige Verbindungsstellen, Schraubverbindungen o. dgl. miteinander verbundene Bügelteile hat.

In manchen Fällen, wie z. B. bei Rohrschellen gemäß DE-A1-34 36 710, kann es auch wichtig sein, daß der Abstandring an einer bestimmten Stelle auf dem Schaft der Spannschraube sitzt, damit er beim Schließen der Rohrschelle nicht stört. In solchen Fällen kann es sich empfehlen, z. B. eine Lippe, einen kammartigen Vorsprung o. dgl. auf der Innenseite des Abstandrings anzuformen. Diese Vorsprünge greifen dann beim radialen Aufklipsen auf den Schraubenschaft in das Schraubgewinde ein und sichern die axiale Lage des Abstandrings auf dem Schaft.

## Patentansprüche

1. Ein- oder mehrteilige Rohrschelle mit wenigstens einer durch radial abgebogene Aufnahmeschenkel begrenzten Öffnung und einer Spannschraube zum Verbinden der Aufnahmeschenkel, **dadurch gekennzeichnet,** daß auf dem Schaft der Spannschraube (9) zwischen den Aufnahmeschenkeln (4, 5 bzw. 6, 7) ein radial aufklipsbarer und abnehmbarer geschlitzter Abstandring (11) sitzt.

2. Rohrschelle nach Anspruch 1, **dadurch gekennzeichnet,** daß der Abstandring einen über etwa 90° des Umfangsbogens reichenden Schlitz aufweist.

3. Rohrschelle nach Anspruch 1 oder 2, **dadurch gekennzeichnet,** daß der Abstandring (11) mit radialer Vorspannung auf dem Schaft der Spannschraube (9) sitzt.

4. Rohrschelle nach Anspruch 3, **dadurch gekennzeichnet,** daß der Abstandring (11) wenigstens einen inneren Vorsprung aufweist, der in das Gewinde der Spannschraube (9) eingreift.

5. Rohrschelle nach einem der Ansprüche 1 bis 4, **dadurch gekennzeichnet,** daß die Spannschraube (9) schwenkbar an einem der Aufnahmeschenkel (5, 6) gelagert ist und der Abstandring (11) dort auf dem Schaft der Spannschraube (9) sitzt, wo er deren Einschwenken in die Schließstellung zuläßt.

6. Rohrschelle nach einem der vorhergehenden Ansprüche, **dadurch gekennzeichnet,** daß der Abstandring (11) aus Kunststoff besteht.

## Claims

1. A one-piece or multipart pipe clamp with at least one opening bounded by radially bent receiving arms and a clamping screw for connecting the receiving arms, characterised in that a slotted spacer ring (11), which can be clipped on and removed radially, is fitted on the shank of the clamping screw (9) between the receiving arms (4, 5 and 6, 7).

2. A pipe clamp according to Claim 1, characterised in that the spacer ring has a slot extending over approximately 90° of the peripheral arc.

3. A pipe clamp according to Claim 1 or 2, characterised in that the spacer ring (11) is fitted with radial preloading on the shank of the clamping screw (9).

4. A pipe clamp according to Claim 3, characterised in that the spacer ring (11) has at least one inner projection which engages in the thread of the clamping screw (9).

5. A pipe clamp according to any one of Claims 1 to 4, characterised in that the clamping screw (9) is pivotably mounted on one of the receiving arms (5, 6) and the spacer ring (11) is fitted on the shank of the clamping screw (9) at a location which allows it to be swung into the closed position.

6. A pipe clamp according to any one of the preceding Claims, characterised in that the spacer ring (11) consists of plastics material.

## Revendications

1. Collier de serrage pour tuyaux en une ou plusieurs parties comportant au moins une ouverture délimitée par des pattes radiales de serrage pouvant être reliées par une vis de serrage, caractérisé en ce que sur la tige de la vis de serrage (9), entre les pattes de serrage (4, 5 ou 6, 7), est monté un anneau d'espacement (11) que l'on peut engager ou dégager radialement.

2. Collier de serrage selon la revendication 1, caractérisé en ce que l'anneau d'espacement présente une fente occupant environ 90° de sa périphérie.

3. Collier de serrage selon la revendication 1 ou 2, caractérisé en ce que l'anneau d'espacement (11) est monté, avec tension radiale, sur la tige de la vis de serrage (9).

4. Collier de serrage selon la revendication 3, caractérisé en ce que l'anneau d'espacement (11) présente au moins une saillie interne en prise avec la vis de tension (9).

5. Collier de serrage selon des revendications 1 à 4, caractérisé en ce que la vis de serrage (9) est montée basculante sur une des pattes de serrage (5, 6) tandis que l'anneau d'espacement (11) est monté sur la tige de la vis de serrage (9) dans une position on il permet le basculement de la vis en position de fermeture.

6. Collier de serrage selon l'une des revendications précédentes, caractérisé en ce que l'anneau d'espacement (11) est en matière synthétique.

Fig.1

Fig. 1

Fig. 2